# EUROPÄISCHE PATENTSCHRIFT

(11) **EP 0 249 184 B1**
(45) Veröffentlichungstag und Bekanntmachung des Hinweises auf die Patenterteilung: **03.02.1993**
(21) Anmeldenummer: 87108284.8
(22) Anmeldetag: 09.06.1987
(51) Int. Cl.: B23G 5/10

(54) **Vorrichtung zum Gewindeschneiden**
Device for cutting threads
Dispositif à fileter

(30) Priorität: 12.06.1986 CH 2387/86
(43) Veröffentlichungstag der Anmeldung: 16.12.1987
(73) Patentinhaber: Milancy Ltd Inc., Panama 1 (PA)
(72) Erfinder: Croce, Jorge, Montevideo (UY)
(74) Vertreter: Scheidegger, Werner & Co.

(56) Entgegenhaltungen:
- CH-A- 87 411
- CH-A- 337 391
- DE-C- 230 154
- DE-C- 240 927
- FR-A- 329 023
- FR-A- 392 582
- FR-A- 604 899

## Beschreibung

Die Erfindung betrifft eine Vorrichtung zum Gewindeschneiden, mit in einem Grundkörper um dessen Mittelachse in Winkelabständen verteilt angeordneten und in radialer Richtung verschieblich gelagerten Schneidbacken, die gemeinsam mittels eines relativ zum Grundkörper drehbaren Steuerrings radial bewegbar sind, der durch von Führungsnuten und in diese eingreifenden Führungbolzen gebildete Getriebemittel mit den Schneidbacken gekuppelt ist.

Gewindeschneidvorrichtungen dieser Art sind bekannt, doch weisen sie den Nachteil auf, dass eine Vorrichtung jeweils nur für die Herstellung einer Gewindedurchmessergrösse geeignet ist, dass man also für abgestufte Durchmessergrössen eine entsprechende Reihe von Vorrichtungen braucht, oder eine Vorrichtung durch Auswechseln einzelner Teile jeweils umbauen muss. Die bekannten Vorrichtungen weisen ausserdem keine praktische Einrichtung auf, die es ermöglicht, nach Fertigstellung des Gewindes, die Schneidbacken wieder von dem Werkstück zu trennen.

Die CH-A-337.391 zeigt eine Vorrichtung der eingangs beschriebenen Art, bei welcher die Zustellung der Schneidbacken mittels eines Ratschen Mechanismus erfolgt, der über den Drehgriff der Gewindeschneidvorrichtung angetrieben wird.

Bei dieser Vorrichtung muss die gewählte Schneidstellung durch Anziehen von mehreren Schrauben fixiert werden, was nicht nur umständlich, sondern auch wenig präzis ist. Die Backen lassen sich damit auch nicht ohne weiteres lösen. Dies spielt nur deshalb eine untergeordnete Rolle, als der Mechanismus lediglich zum Nachstellen der Schneidbacken auf ein bestimmtes Sollmass dient, nicht aber zum Umstellen auf verschiedene Gewindedurchmesser.

Die der vorliegenden Erfindung zugrunde liegende Aufgabe bestand daher darin, eine Vorrichtung zum Gewindeschneiden mit einer praktisch zu handhabenden Einrichtung zum Öffnen und ferner eine solche Vorrichtung zu schaffen, die auf einfache, präzise Weise für mehr als eine Gewindegrösse verwendbar ist. Zur Lösung dieser Aufgaben weist die Vorrichtung die Merkmale gemäss Anspruch 1 auf, wobei die praktisch zu handhabende Einrichtung zum Öffnen bzw. zum Auseinanderbewegen der Schneidbacken gleichzeitig auch eine Einrichtung zum Einstellen der Vorrichtung auf verschiedene Durchmessergrössen bildet, so dass mit der gleichen Vorrichtung beispielsweise ein 1/2" und ein 3/4"-Gewinde oder mit einem grösseren Typ der Vorrichtung 1" und 1 1/4"-Gewinde mit grosser Präzision hergestellt werden kann.

Ein Ausführungsbeispiel der Erfindung wird nachfolgend anhand der Zeichnungen näher erläutert. Es zeigen:
Fig. 1 eine Draufsicht auf die Stirnseite der Vorrichtung in der für die Herstellung von 1/2˝-Gewinde eingestellten Arbeitsstellung;
Fig. 2 eine Draufsicht auf die gleiche Vorrichtung gemäss Fig. 1 in der geöffneten Stellung;
Fig. 3 eine Draufsicht auf die Rückseite des Steuerrings, der einen Teil der Vorrichtung gemäss Fig. 1 bildet;
Fig. 4 eine Draufsicht auf die Vorrichtung wie Fig. 1, in ausführlicherer Darstellung;
Fig. 5 einen Axialschnitt durch die Vorrichtung gemäss Fig. 4;
Fig. 6 eine Ansicht der Vorrichtung von der Rückseite gesehen.

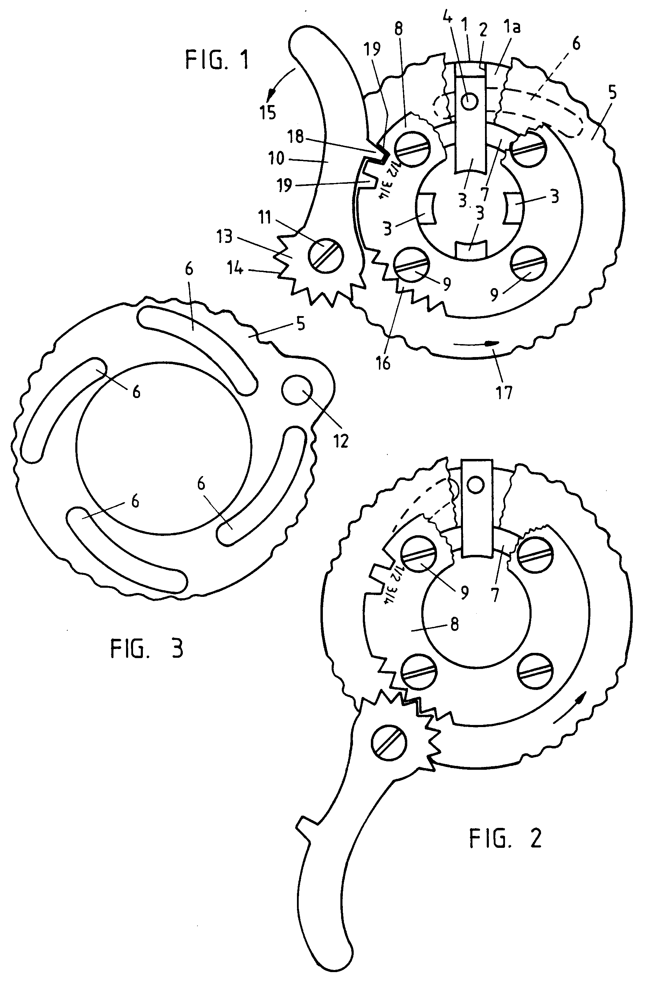

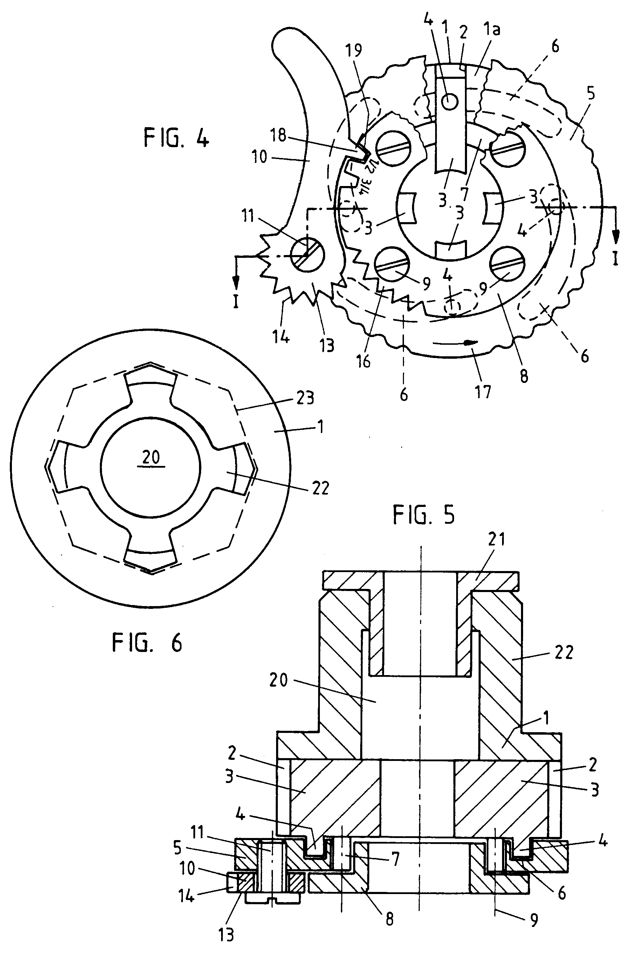

Die Vorrichtung zum Gewindeschneiden weist einen vorzugsweise aus einem Gussstück bestehenden Grundkörper 1 auf, dessen Formgebung in Fig. 5 am deutlichsten erkennbar ist und der einen im wesentlichen hohlzylindrischen Körper zur Aufnahme des mit Gewinde zu versehenden Wërkstücks darstellt, dessen Aussenfläche aber nur teilweise zylindrisch ist. Von der in Fig. 1 in der Zeichenebene liegenden Oberseite des Grundkörpers 1 erstrecken sich vier um 90° versetzt zueinander angeordnete radial verlaufende Schlitze 2 in den Grundkörper 1 hinein. In jedem Schlitz 2 ist eine Schneidbacke 3 radial verschieblich geführt. Die vier um 90° versetzt zueinander angeordneten Schneidbacken 3 dienen zum Herstellen eines Gewindes an einem in der Zeichnung nicht dargestellten Werkstück, welches koaxial zur Mittelachse des Grundkörpers 1 gehalten ist und um welches der Grundköprer 1 mit den auf eine bestimmte Durchmessergrösse des Werkstücks eingestellten Schneidbacken 3 gedreht wird.

Jede Schneidbacke 3 besitzt an seiner Oberseite einen nach oben vorstehenden Stift oder Führungsbolzen 4, welcher in eine an der Unterseite eines Steuerrings 5 ausgebildete Nut 6 eingreift. Der in Fig. 3 in Ansicht von der Unterseite dargestellte Steuerring 5 weist an seiner Unterseite vier über den Umfang gleichmässig verteilt angeordnete Nuten 6 auf, die nicht auf einem zum Zentrum des Steuerrings konzentrischen Kreis, sondern quasi auf Spirallinien, d.h. entlang einer Linie mit zunehmendem radialen Abstand vom Zentrum verlaufen. Dadurch werden beim Verdrehen des Steuerrings 5 die in die Führungsnuten 6 mit den Führungsbolzen 4 eingreifenden Schneidbacken 3 gemeinsam in radialer Richtung in den Schlitzen 2 des Grundkörpers 1 bewegt, und zwar je nach der Drehrichtung des Steuerrings 5 radial nach aussen oder nach innen bewegt. Der Steuerring 5 liegt mit seiner die Führungsnuten 6 aufweisenden Unterseite auf einer oberseitigen Radialfläche 1a des Grundkörpers 1 auf und ist auf einem von dieser Radialfläche 1a vorspringenden, zylindrischen und mit den Radialschlitzen 2 versehenen Endteil 7 des Grundkörpers 1 drehbar gelagert, was aus Fig. 5 am deutlichsten hervorgeht. An der Stirnfläche dieses zylindrischen Endteils 7 des Grundkörpers 1 ist eine koaxial zur Mittelachse des Grundkörpers angeordneter Flanschring 8 mittels vier Schrauben 9 befestigt. Dadurch ist der Steuerring 5 zwischen der genannten Radialfläche 1a des Grundkörpers 1 und diesem Flanschnring 8 so gehalten, dass er sich auf dem Endteil 7 des Grundkörpers drehen lässt.

Um den Steuerring 5 zwecks gemeinsamer Verstellung aller Schneidbacken 3 zu verdrehen, ist auf dem Steuerring 5 ein in der Radialebene schwenkbarer Hebel 10 mittels einer die Drehachse bildenden Schraube 11, die sich in eine Gewindebohrung 12 am Steuerring 5 hinein erstreckt, schwenkbar gelagert. Dieser auf dem Steuerring 5 befestigte Hebel 10 befindet sich neben dem Flanschring 8 in der gleichen Ebene und der Hebel 10 weist ein koaxial zur Drehachse 11 kreisbogenförmig ausgebildetes Hebelende 13 auf, und an dem Rand dieses kreisbogenförmigen Hebelendes ist eine Verzahnung 14 ausgebildet. Wenn der Hebel 10 in der Richtung des Pfeils 15 verschwenkt wird, gelangt bei einer vorgegebenen Schwenkstellung des Hebels beginnend die Verzahnung 14 mit einer Gegenverzahnung 16 am Aussenrand des Flanschrings 8 in Eingriff und da der Flanschring 8 am Grundkörper 1 festgeschraubt ist, wird durch die Schwenkbetätigung des Hebels und die in Eingriff stehenden Verzahnungen der Steuerring relativ zum Grundkörper 1 in Richtung des Pfeils 17 verdreht. Die Stellung des schwenkbaren Hebels 10 und des Steuerrings 5 nach der Betätigung des Hebels ist in Fig. 2 dargestellt. Durch die Drehung des Steuerrings 5 sind dann die Schneidbacken 3 radial nach aussen bewegt. Diese Bewegung der Schneidbacken erfolgt nach Fertigstellung eines Gewindes an einem Werkstück, um das fertig bearbeitete Werkstück aus der Vorrichtung herausnehmen zu können.

Der Flanschring 8 und der schwenkbare Hebel 10 sind nun auch gleichzeitig so ausgebildet, dass der Steuerring 5 in zwei unterschiedliche Drehstellungen relativ zum Grundkörper 1 arretiert werden kann. Die zwei unterschiedlichen Drehstellungen des Steuerrings entsprechen zwei unterschiedlichen Stellungen der Schneidbacken 3, die dadurch für zwei verschiedene Durchmessergrössen eines herzustellenden Gewindes fest eingestellt werden können. Zu diesem Zweck ist an der Schmalseite des schwenkbaren Hebels eine vorspringende Nase 18 ausgebildet, die in eine am Aussenrand des Flanschrings 8 ausgebildete Kerbe 19 eingerastet wird. Es sind am Aussenrand des Flanschrings 8 im Abstand voneinander zwei Kerben 19 ausgebildet und die am Hebel 10 angeordnete Nase 18 wird wahlweise in die eine oder die andere Kerbe 19 eingerastet. Zu diesem Zweck lässt sich der Steuerring 5 bei noch nicht eingerastetem Hebel 10 von Hand etwas verdrehen, da im ersten Schwenkbereich des Hebels 10 die Verzahnungen 14 und 16 am Hebel 10 und am Flanschring 8 noch nicht in Eingriff stehen. Auf diese Weise ist mit sehr einfachen Mitteln erreicht, dass zwei verschiedene Gewindegrössen, beispielsweise ein 1/2˝-Gewinde und 3/4˝-Gewinde mit der gleichen Vorrichtung hergestellt werden können. Mit einer nur in der Dimensionierung abweichend ausgebildeten nächst grösseren Vorrichtung lassen sich dann beispielsweise 1˝-Gewinde und 1 1/4˝-Gewinde herstellen.

Beim Herstellen des Gewindes erstreckt sich das mit Gewinde zu versehene Werkstück durch die Durchgangsbohrung 20 im Grundkörper 1 (Fig. 5). Damit dabei die im Durchmesser unterschiedlich grossen Werkstücke genau zentrisch gehalten sind, wird mindestens für das jeweils den kleineren Durchmesser aufweisende Werkstück in den Grundkörper 1 von seinem dem Steuerring 5 abgewandten Ende her eine Führungsbuchse 21 in den Grundkörper 1 bzw. die Durchgangsbohrung 20 hineingesteckt.

Fig. 1 und Fig. 4 unterscheiden sich nur durch die in Fig. 4 zusätzliche Darstellung aller vier Führungsnuten 6 am Steuerring 5 in gestrichelten Linien, die aus Gründen der besseren Uebersichtlichkeit in der Darstellung gemäss Fig. 1 weggelassen sind.

Für die Herstellung des Gewindes wird der Grundkörper 1 um seine Achse gedreht. Der Grundkörper ist vorzugsweise ein Gusskörper, der in seinem von den Schneidbacken 3 abgewandten und im Durchmesser kleineren Abschnitt in axialer Richtung gesehen eine in Fig. 6 dargestellte Umrissform aufweist. Insgesamt vier über den Umfang verteilt angeordnete radial vorspringende Rippen 22 sind an den zueinander winkligen Aussenflächen so ausgebildet, dass sie in ein in Fig. 6 in gestrichelten Linien dargestelltes Achteck 23 genau hineinpassen. Ein nicht dargestelltes Antriebselement weist einen im Umriss achteckigen Hohlraum 23 zur Aufnahme des Grundkörpers 1 auf, welcher dann durch das Antriebselement gedreht wird. Der Grundkörper 1 kann natürlich auch abweichend von der dargestellten Ausführungsform ausgebildet sein und anders gestaltete Mittel aufweisen, um eine Drehverbindung mit einem Antriebselement herzustellen. Ebenso kann auch die Einstellung der Vorrichtung auf verschiedene Gewindegrössen und die Arretierung der Schneidbacken in verschiedenen Stellungen auf andere Weise als vorstehend beschrieben ist, bewerkstelligt werden, beispielsweise kann der Steuerring 5 mit Hilfe eines am Grundkörper 1 schwenkbar angeordneten und in eine Kerbe am Rand des Steuerrings eingreifenden Riegels in unterschiedlichen Drehstellungen arretiert werden.

## Patentansprüche

1. Vorrichtung zum Gewindeschneiden, mit in einem Grundkörper (1) um dessen Mittelachse in Winkelabständen verteilt angeordneten und in radialer Richtung verschieblich gelagerten Schneidebacken (3), die gemeinsam mittels eines relativ zum Grundkörper (1) drehbaren Steuerrings (5) radial bewegbar sind, der durch von Führungsnuten (6) und in diesen eingreifenden Führungsbolzen (4) gebildete Getriebemittel mit den Schneidbacken (3) gekuppelt ist, dadurch gekennzeichnet, dass der zwischen einer Radialfläche (1a) des Grundkörpers (1) und einem an diesem koaxial befestigten Flanschring (8) drehbar gehaltene Steuerring (5) einen um eine am Steuerring (5) achsparallel angeordnete Drehachse (11) in der Radialebene schwenkbaren Hebel (10) trägt, der ein koaxial zu Drehachse (11) kreisbogenförmig ausgebildetes Hebelende (13) mit einer längs eines Abschnitts des Kreisbogens ausgebildeten Verzahnung (14) aufweist, die bei Erreichen einer vorgegebenen Schwenkstellung des Hebels (10) mit einer Verzahnung (16) am Rand des Flanschrings (8) in Eingriff gelangt, um durch weitere Schwenkbewegung des Hebels (10) den Steuerring (5) relativ zum Flanschring (8) zu drehen und die mit dem Steuerring (5) gekuppelten Schneidbacken (3) in radialer Richtung zu bewegen, wobei der Steuerring (5) in zwei unterschiedlichen Drehstellungen relativ zum Grundkörper (1) entsprechend zwei unterschiedlichen Stellungen der Schneidbacken am Grundkörper (1) bzw. am mit diesem festverbundenen Flanschring (8) arretierbar ist, um mit den gleichen Schneidbacken (3) zwei Gewinde mit unterschiedlichem Durchmesser herzustellen, und dass der Steuerring (5) mittels des auf ihm drehbar gelagerten schwenkbaren Hebels (10) in seiner bei Anlage gegen den Flanschring (8) einwärts geschwenkten Stellung mit Hilfe einer an der Hebelschmalseite vorspringenden Nase (18), die in eine von zwei am Aussenrand des Flanschrings (8) ausgebildete Kerben (9) einrastbar ist, an dem Flanschring (8) arretierbar ist.

2. Vorrichtung nach Anspruch 1, dadurch gekennzeichnet, dass der Steuerring (5) auf einem stirnseitig von der genannten Radialfläche (1a) vorspringenden, zylindrischen und mit Radialschlitzen (2) zum Einsetzen der Schneidbacken (3) versehenen Endteil (7) des Grundkörpers (1) drehbar gelagert ist und der Flanschring (8) an der Stirnfläche des zylindrischen Grundkörper-Endteils (7) festgeschraubt ist.

3. Vorrichtung nach Anspruch 1, dadurch gekennzeichnet, dass der Steuerring (5) an seiner gegen die Radialfläche (1a) des Grundkörpers (1) anliegenden Unterseite vier in gleichen Winkelabständen verteilt angeordnete und bezüglich des Steuerringzentrums längs Spirallinien verlaufende Führungsnuten (6) aufweist, in die je ein an der Oberseite jeder Schneidbacke (3) angeordneter Führungsbolzen (4) eingreift.

4. Vorrichtung nach Anspruch 1, dadurch gekennzeichnet, dass in den eine Durchgangsbohrung (20) aufweisenden Grundkörper (1) von dem dem Steuerring (5) abgewandten Ende her eine Führungsbuchse (21) zur Führung des mit Gewinde zu versehenen Werkstücks auswechselbar einsetzbar ist und auswechselbare Führungsbuchsen (21) sich im Innendurchmesser entsprechend dem Aussendurchmesser der mit Gewinde zu versehenen Werkstücke unterscheiden.

## Claims

1. Device for cutting threads, comprising a main body (1) and screwing jaws (3) mounted therein at angular distances around its central axis and movable in radial direction, said screwing jaws being jointly radially movable by means of a control sleeve (5) rotatable with respect to said main body (1), said sleeve being coupled to said screwing jaws (3) by the intermediary of a mechanism formed by guiding grooves (6) and guiding bolts (4) meshing therewith, characterized in that said control sleeve (5), rotatably retained between a radial surface (1a) of the main body (1) and an annular flange (8) coaxially mounted to the latter, has mounted thereon a lever (10) pivotable in said radial surface about a pin (11) provided on said control sleeve and extending parallely to the axis of the latter, said lever having an end portion (13) in the form of an arc of circle coaxial with respect to said pin (11) and provided along a portion of the arc of circle with a toothing (14), meshing with a toothing (16) at the edge of said annular flange (8) when the lever, after pivotement, reaches a predetermined position for thereby rotating the control sleeve (5) relatively to said annular flange (8) when the pivoting movement is continued to thereby radially moving said screwing jaws (3) coupled to said control sleeve (5), the latter being lockable on said main body (1) respectively on said annular flange (8) secured to the latter in two different rotational positions with respect to said main body - corresponding to two different positions of said screwing jaws - to thereby permit the cutting of two threads having different diameters with the same screwing jaws, and in that said control sleeve (5) is lockable on said annular flange (8) by means of said lever (10) pivotably mounted thereon and brought into its position pivoted towards the interior, when it bears against said annular flange, by means of a lug (18) projecting from a small face of said lever and engaging one of two notches (9) on the outer edge of said annular flange (8).

2. Device according to claim 1, characterized in that said control sleeve (5) is pivotably mounted on a cylindrical end portion (7) of the main body (1) projecting from the front face of said radial surface (1a) and having radial slots (2) provided for receiving said screwing jaws (3), and in that said annular flange (8) is screwed by means of screws on the front face of said cylindrical end portion (7) of the main body.

3. Device according to claim 1, characterized in that said control sleeve (5) has on its lower face bearing against the radial surface (1a) of the main body four guiding slots (6) disposed at equal angular distances and extending, with respect to the center of said control sleeve, along spiral lines, each slot receiving a guiding bolt (4) arranged on the upper surface of each screwing jaw (3).

4. Device according to claim 1, characterized in that the main body (1) presents a throughbore (20) into which exchangeable guiding sleeves (21) can be introduced from the end opposite to the control sleeve (5) for guiding the workpiece provided with a thread, said exchangeable guiding sleeves differing from each other by their interior diameter in correspondance with the exterior diameter of the workpieces to be provided with a thread.

## Revendications

1. Dispositif à fileter, comprenant un corps de base (1) et des mâchoires (3) disposées dans ce dernier à des distances angulaires autour de son axe central et déplaçables en direction radiale, les mâchoires étant en commun déplaçables radialement au moyen d'un anneau de réglage (5) pouvant être tourné par rapport au corps de base (1), l'anneau étant accouplé aux mâchoires (3) par l'intermédiaire d'un mécanisme formé par des rainures de guidage (6) et des goujons de guidage (4) engrènant dans ses dernières, caractérisé en ce que l'anneau de réglage (5), retenu de manière rotative entre une surface radiale (1a) du corps de base (1) et un flasque annulaire (8) fixé coaxialement sur ce dernier, porte un levier (10) pivotable dans la surface radiale autour d'un pivot (11) disposé sur l'anneau de réglage et s'étendant parallèlement à l'axe de ce dernier, ledit levier ayant une extrémité (13) en forme d'un arc de cercle coaxial par rapport au pivot (11) et munie le long d'une section de l'arc de cercle d'une denture (14) qui engrène avec une denture (16) sur le bord du flasque annulaire (8) lorsque le levier atteint après pivotement une position prédéterminée pour tourner l'anneau de réglage (5) par rapport au flasque annulaire (8) lorsque le mouvement de pivotement est poursuivi et ainsi déplacer radialement les mâchoires (3) accouplées à l'anneau de réglage (5), ce dernier pouvant être bloqué sur le corps de base (1) respectivement sur le flasque annulaire (8) fixé sur ce dernier dans deux positions de rotation différentes par rapport au corps de base - correspondant à deux positions différentes des mâchoires - pour permettre la découpe de deux filets ayant des diamètres différents avec les mêmes mâchoires, et en ce que l'anneau de réglage (5) peut être bloqué sur le flasque annulaire (8) au moyen du levier (10) monté de manière pivotable sur lui amené dans sa position pivoté vers l'intérieur, lorsqu'il s'appuie contre le flasque annulaire, à l'aide d'un nez (18) projetant d'une face étroite du levier qui s'engage dans l'une de deux encoches (9) sur le bord extérieur du flasque annulaire (8).

2. Dispositif selon la revendication 1, caractérisé en ce que l'anneau de réglage (5) est monté pivotable sur une partie terminale cylindrique (7) du corps de base (1) se projetant de la face frontale de ladite surface radiale (1a) et présentant des fentes radiales (2) destinées à recevoir les mâchoires (3), et en ce que le flasque annulaire (8) est vissé au moyens de boulons sur la face frontale de la partie terminale cylindrique (7) du corps de base.

3. Dispositif selon la revendication 1, caractérisé en ce que l'anneau de réglage (5) présente sur sa face inférieure s'appuyant contre la surface radiale (1a) du corps de base (1) quatre rainures de guidage (6), disposées à des distances angulaires égales et s'étendant par rapport au centre de l'anneau de réglage le long de lingnes en forme de spirale, chaque rainure recevant un goujon de guidage (4) disposés sur la face supérieure de chaque mâchoire (3).

4. Dispositif selon la revendication 1, caractérisé en ce que le corps de base (1) présente un alésage (20) dans lequel à partir du bout opposé à l'anneau de réglage (5), des douilles de guidage (21) échangeables pour guider la pièce pourvue d'un filetage peuvent être introduites, les douilles de guidage échangeables se distinguant par leur diamètre intérieur en correspondance avec le diamètre extérieur des pièces à munir d'un filetage.
